(19) **Europäisches Patentamt**

**European Patent Office**

**Office européen des brevets**

(11) Publication number: **0 426 503 A1**

# (12) EUROPEAN PATENT APPLICATION

(21) Application number: 90312107.7

(51) Int. Cl.5: **B60R  1/08**

(22) Date of filing: 05.11.90

(30) Priority: 03.11.89 US 431284

(43) Date of publication of application:
08.05.91 Bulletin 91/19

(84) Designated Contracting States:
DE FR GB IT

(71) Applicant: **DONNELLY CORPORATION**
414 East Fortieth Street
Holland Michigan 49423(US)

(72) Inventor: **Gaffney, Thomas D.**
1 Gratton Park
Greystones, Co. Wicklow(IE)
Inventor: **Schierbeek, Kenneth L.**
8644 Fairview Lane
Zeeland, Michigan 49464(US)

(74) Representative: **Robinson, Anthony John Metcalf et al**
Kilburn & Strode 30 John Street
London, WC1N 2DD(GB)

(54) **Drive circuit for an electrochromic cell.**

(57) A continuously variable rearview mirror system (10) includes a reflective element (28) having a reflectance condition that varies as a function of the amplitude of a signal applied to the element. Forward and rearward facing light sensors (12,14) receive light independent of the reflectance condition of the mirror and produce an ambient light signal and a signal indicative of light directed into the reflective element. A control circuit (13) includes a difference amplifier (20) that is responsive to the ambient and rearward light signals for producing an output signal that is a function of the arithmetic difference between the ambient and rearward light signals multiplied by the gain of the difference amplifier. The control circuit produces a family of constant-reflectance curves which model an ideal response over all relevant ambient light levels. Offset circuits are provided to allow the relationship between the output signal from the control circuit and the drive signal applied to the reflectance element to be preselected to accommodate various types of reflectance elements and to fine-tune the response of the drive signal applied to the reflectance element.

FIG· I

EP 0 426 503 A1

## DRIVE CIRCUIT FOR AN ELECTROCHROMIC CELL

This invention relates to rearview mirrors that automatically adjust to the level of light reflected by a reflectance element. The invention is especially adapted for use with such a mirror having a reflectance element whose reflectance is continuously variable, within limits, in response to an electrical signal applied thereto. More particularly, the invention concerns a mirror in which the reflectance element is an electrochromic cell.

It is well-known to provide a rearview mirror for a vehicle having a control which adjusts the reflective condition of a reflective element in response to the ambient light level, sensed by a forward facing sensor, and the level of light directed at the reflectance element from the rear of the vehicle, or glare, sensed by a rearward facing sensor. One such automatic rearview mirror utilizes a prism-type reflective element, which is substantially identical with that used in manually-operated day-night mirrors provided on vehicles. The mirror control establishes either a high reflectance condition, when the rearward signal is below a level established by the ambient light signal, or a low reflectance condition, when the rearward signal is above the threshold level. Such mirrors have numerous difficulties including the availability of only two reflectance conditions and the annoyance of either frequent mirror flipping or being in the incorrect reflectance mode. An example of such a mirror is US-A-3,601,614, issued to Platzer.

An improved mirror includes a continuously variable reflectance element that is electrically stimulated to alter the light transmittance value of a variable light attenuating layer rather than provide flipping between mechanical states. The reflectance condition of the mirror is typically determined by positioning a light sensor where it will receive light directed from the rear of the vehicle and which has been attenuated by the variable light attenuating layer. This is typically accomplished by removing the reflective coating from a portion of the mirror and positioning the sensor on a forward portion of the mirror where the reflective coating has been removed, such that light striking the sensor from the rear of the vehicle is attenuated by the variable light attenuating layer. A control responds to the attenuated rearward light signal and a setpoint signal, typically established by an ambient light sensor, to vary the electrical signal stimulating the variable light attenuating layer until the rearward light signal equals the setpoint signal. Thus, such control is said to operate in a closed control loop because changes in the output variable (transmittance value of the variable attenuating layer) are detected by an input device (rearward light sensor) to restore balance to the system. While such a mirror control avoids many difficulties of the mechanical prismatic mirror, the removal of a portion of the reflective coating produces a noticeable spot on the mirror which appears as a blemish to the user. An example is US-A-4,603,946, issued to Kato et al.

Controls for mirrors having continuously variable reflectance elements have been proposed which avoid the use of rearward facing sensors positioned opposite the light attenuating layer. Such controls are said to operate in an open-loop mode because the input light sensors are not apprised of changes in the output variable. One such open-loop control is suggested in EP-A-0,285,724 of Jon H. Bechtel. Although this application is primarily directed to closed-loop controls, in one embodiment it is suggested that the rearward, or glare, light sensor may be made independent of the condition of the variable light transmittance layer by making modifications to a closed-loop control circuit. While this application purports to produce an output voltage which causes the transmittance of the light attenuating layer to assume the ideal value for the level of glare directed at the mirror, the actual test data set forth in the application demonstrates performance at only one ambient light level. The important measure of performance requires an ideal response over a wide range of ambient levels.

Another difficulty with electrochromic cells is the slow time response to a command for a change in the reflective condition of the mirror. It is not uncommon for an increase in the reflectivity from a 10% to a 60% reflectivity value to require eight seconds. A colouration of the cell from 70% to 20% reflectivity typically requires four seconds. When a sudden increase in glare is experienced by the mirror, the slow time response in decreasing the reflectivity can result in an unacceptably long period of time in which the light level reflected into the driver's eyes exceeds the glare tolerance level. This characteristic of electrochromic cells is even more noticeable in open loop controls in which the drive signal for the electrochromic cell varies within a small range even for abrupt changes in the desired reflectivity of the mirror. Thus, the true potential of the variable reflectance mirror remains unrealized.

The invention is set out in the accompanying claims, preferred but optional features being included in the dependent claims. To assist in understanding, there will now follow a non-limiting discussion of various aspects of the invention and preferred features and embodiments thereof.

The present invention provides an automatic rearview mirror control that produces infinite variability of the reflectance of a reflective element in a manner that models an ideal response. Such a mirror is provided with an open-loop control which does not require an uncoated spot in the reflective element and avoids the need for costly circuit components. According to one feature of the invention, an automatic rearview mirror system for a vehicle includes a reflective element having a reflectance condition that varies as a function of the amplitude of a signal applied to the element. The mirror system further includes an ambient light signal generating means for producing an ambient light signal indicative of the ambient light and a rear light signal generating means for producing a rear light signal indicative of light rear of the vehicle, or glare. The mirror system further includes control means responsive to the ambient and rear light signals for producing an output signal that is a function of the difference between the ambient and rear light signals and is substantially independent of the reflectance condition of the reflective element. The control, accordingly, operates in an open-loop mode. Importantly, such a control very closely matches the ideal response for all relevant ambient light levels.

According to a preferred feature of the invention, the control means is a difference amplifier and includes gain establishing means for establishing a gain value such that the signal applied to the mirror is a product of the gain and the difference between the ambient light signal and the rear light signal. The gain value may, therefore, be selected to cause the signal applied to the variable reflectance element to have a value with respect to the difference between the ambient and the rear light signals, that matches the performance characteristics of the variable reflectance element. In this manner, differences in slope of the reflectance versus voltage curve of various electrochromic cells may be accommodated by adjusting only one parameter of the circuit.

According to another preferred feature of the invention, biasing means are provided for adjusting the relationship between the ambient and rear light signals and the amplitude of the signal applied to the variable reflectance element to accommodate differences, other than slope of the reflectance vs voltage curve, between various types of electrochromic cells. Such biasing means may further provide selection of the shutoff, or full reflectance, signal level applied to the variable reflectance element.

According to yet another preferred feature of the invention, drive means are provided for applying an input signal to the reflective element as a function of the desired reflectance condition of the mirror. The drive means includes means for temporarily offsetting the input signal from a value that corresponds to the desired reflectance condition of the reflective element to increase the rate of change of the reflectance condition of the reflective element. Because the offset is temporary, the input signal to the reflective element is at the appropriate level for the desired reflectance condition before the reflective element colours or bleaches to that level. Additionally, it has been discovered that the maximum safe operating voltage of the reflectance element may be temporarily exceeded by this method to speed up the change of the reflectance element from a maximum to a minimum reflectance condition or vice versa. The temporary offset of the input signal is in the direction of change of the input signal in either an increasing or a decreasing reflectance condition to increase the speed of coloration and bleaching of the variable reflectance element.

The invention may be carried into practice in various ways but one embodiment of the invention will now be described with reference to the accompanying drawings, in which:

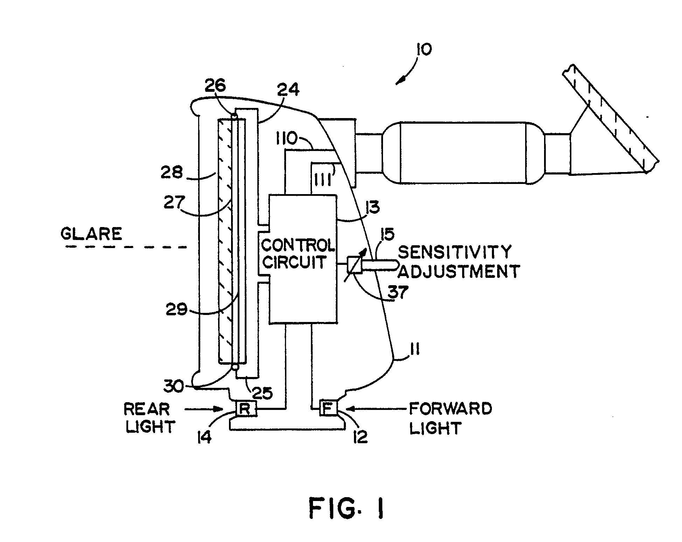

Fig. 1 shows an automatic rearview mirror system according to the invention;

Fig. 2 is a schematic diagram of the automatic mirror system;

Fig. 3 is a graph illustrating the reflectance of an electrochromic cell as a function of the voltage applied to its terminals;

Fig. 4 is a graph illustrating the ideal response of a rearview mirror as a function of ambient and glare light levels;

Fig. 5 is a schematic diagram of an electrical control circuit in the system;

Fig. 6 is a graph of the output voltage of the circuit in Fig. 5 as a function of the signals received from the forward and rear light sensors;

Fig. 7 is a graph illustrating the actual response of a mirror system built according to the present invention;

Fig. 8 is a schematic diagram of further parts of the system;

Fig. 9 is a schematic diagram of other parts of the system;

Fig. 10 is a schematic diagram of a possible arrangement of part of the system;

Fig. 11 is a schematic diagram of an embodiment of the arrangement illustrated in Fig. 10; and

Fig. 12 is a schematic diagram of an electrical control circuit combining various features of the invention.

I. Mathematical Model

3

A mirror system 10 includes a housing 11 which encloses a variable reflective element 28 and a control circuit 13. Mounted to the exterior of housing 11 is a forward light sensor 12 which receives light from a direction of the vehicle other than the rear. A second light sensor 14 is mounted to the exterior of housing 11 facing the rear of the vehicle, which is the same direction from which glare-causing light, which is reflected by reflective element 28 to the driver, is received. A sensitivity adjusting device 15 extends through the housing to allow the driver to adjust the response of the mirror to glare. Light sensors 12, 14 and sensitivity adjustment device 15 are received as inputs to circuit 13. Supply voltage from the ignition of the vehicle is received on lines 110, 111. Output lines 24, 25 from circuit 13 provide a drive signal to terminals 26, 30 of a variable light attenuating layer 27 of variable reflectance element 28. The amplitude of the voltage across lines 24, 25 determines the light transmittance value of layer 27. Because light is transmitted twice through layer 27, the amount of light attenuated by layer 27 will determine the amount of light reflected by reflectance element 28. In the illustrated embodiment, variable reflectance element 28 is an electrochromic cell which may be either electrochemichromic or a cell having thin-film electrochromic coatings. However, the invention may be applied to any cell whose light transmittance is a function of the electrical signal applied to its terminals.

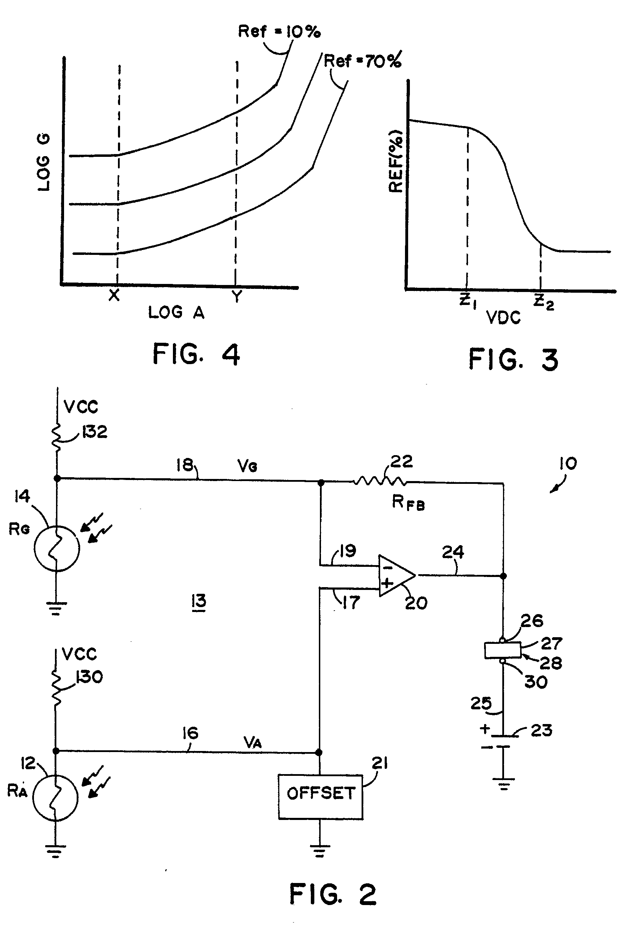

The functional schematic diagram of one aspect of the present invention is illustrated in Fig. 2. Forward light sensor 12 is connected in a voltage divider including a series resistor 130 between positive voltage VCC and ground to produce an ambient light voltage signal on line 16 with respect to ground. A rearward light signal is produced with respect to ground on a line 18 as the voltage across rear light sensor 14, which is connected in a voltage divider including a resistor 132 connected in series with sensor 14 between positive voltage VCC and ground. Forward and rearward light sensors 12, 14 are cadmium sulphide light sensitive resistance devices whose resistance varies with light according to the following:

$R = NL^{-P}$ where: L light intensity

R resistance

N,P are constants

Forward and rear signal lines 16, 18 are connected respectively to the noninverting input 17 and inverting input 19 of a differential input operational amplifier 20. Amplifier 20 produces an analog voltage on its output 24 which is proportional to the arithmetic difference of the ambient light signal on line 16 and the rear light signal on line 18. The gain of amplifier 20 is proportional to the resistance value of a feedback resistor 22, extending between output 24 and rearward light signal line 18. The resistance value of feedback resistor 22 is such that amplifier 20 will operate in a non-saturated, or linear, mode. The signal developed on output line 24 is thus equal to the arithmetic difference between the analog voltage on line 16 and the analog voltage on line 18 multiplied by a gain value that is established by the resistance value of resistor 22.

A first constant offset circuit 21 provides biasing means to increase the level of the signal on line 16 by a fixed DC offset that is preselected to adjust the value of the output signal on line 24 to a predetermined value when the level of light sensed by forward and rear sensors 12 and 14 are equal. This predetermined voltage value is shown at point 21 in Fig. 3 as the point where the change of reflectance with respect to the amplitude of the applied drive signal, which is the slope of the illustrated curve, changes from more gradual to more steep.

The output of amplifier 20 on line 24 is connected to terminal 26 of light attenuating layer 27 of variable reflectance element 28. The other terminal 30 is connected with signal ground through a second constant offset circuit 23. Offset circuit 23, which is shown for illustration purposes as a battery, whose positive terminal is connected with terminal 30 and whose negative terminal is connected with signal ground 31, provides a positive DC offset to cell 28. The effect of offset circuit 23 is to adjust the relationship between the level of voltage produced on output line 24 and the voltage applied across terminals 26, 30. This has the effect of shifting the entire reflectance versus voltage curve illustrated in Fig. 3 to the left or right with respect to the coordinates shown. This provides a convenient technique to apply, for example, a negative voltage across terminals 26, 30 when it is desired to place the reflectance element in a maximum reflectance condition.

Bright light reflecting into the eyes of a driver during night driving can seriously impair forward vision. Ideally, the reflective level, or reflectance, of the rearview mirror should be just low enough to keep reflected glare below the disability level. This would give the driver maximum visibility as well as glare protection. Additionally, changes in the (logarithm of) intensity of glare would produce the same effect, in an ideal mirror, for one ambient light level as an equally-sized shift in the same direction at any ambient light level. This ideal model is illustrated in Fig. 4 in which the logarithm of the ambient light intensity is charted against the logarithm of the light intensity incident the mirror from the rear of the vehicle, or glare. The lines, which indicate a particular value of constant reflectance for the reflective element, are illustrated as parallel lines that are equally offset from each other. Thus, regardless of the level of ambient light, a change in the log of glare intensity will produce a consistent change in the reflectance of the reflective element. It should be observed that the slope of the parallel lines in Fig. 4 flatten out at very low levels of ambient light because the eye's tolerance to glare does not change significantly below a certain level of ambient light. Likewise, the slope of the lines in Fig. 4 become steep at very high levels because the eye becomes insensitive to glare above a certain high level of ambient, such as daylight.

The value of reflectance of the reflective element (Ref) required to maintain the glare (G) below the glare tolerance (GT) of the driver is represented by:

$$Ref = \frac{GT}{G} \qquad (1)$$

The value of reflectance is typically limited between 0.1 and 0.7. It is additionally known from experimental data that the glare tolerance of the driver increases linearly with ambient light on a log scale over the range of glare studied. This can be expressed:

$$GT = CA^B + D \qquad (2)$$

where, A represents the intensity of ambient light;

C,B and D are constants that vary with the individual, depending on eye sensitivity to light, age and the like.

Combining equations (1) and (2) provides:

$$Ref\ G = CA^B + D = C(A^B + \frac{D}{}) \qquad (3)$$

By taking the logarithm of equation (3):

$$Log\ Ref + Log\ G = Log\ C + Log(A^{B + D}) \qquad (4)$$

Since Log C is a constant, equation (4) can be written

$$Log\ Ref = Log\ (A^B + H) - Log\ G + K$$

where: H, K are constants

The desired reflectance of the reflective element may then be related to the intensities of the rearward and ambient light signals as:

$$Ref = antilog\ [Log(A^{B + H}) - Log\ G + K] \qquad (5)$$

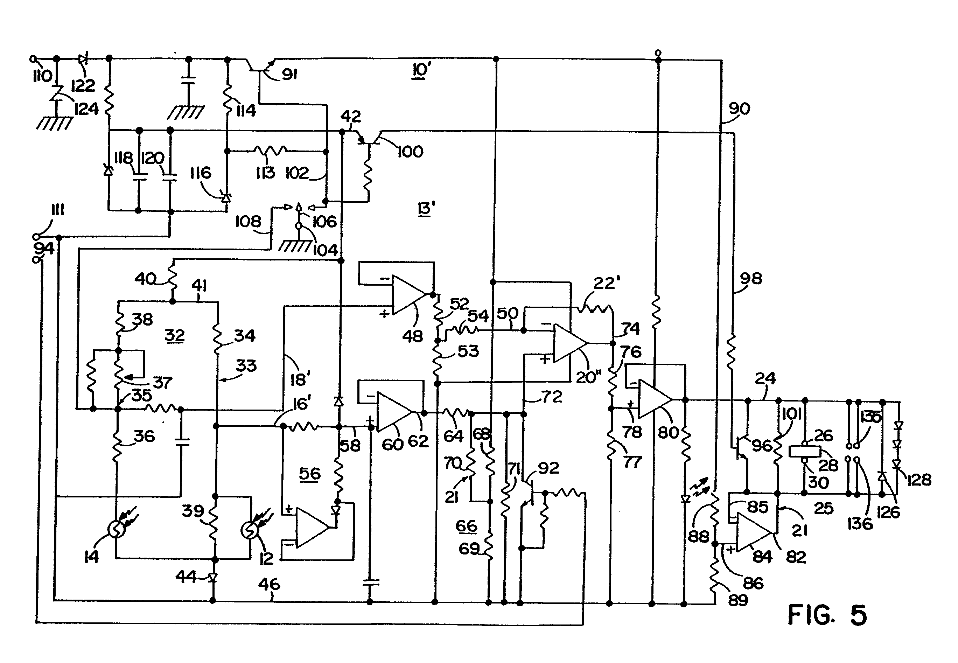

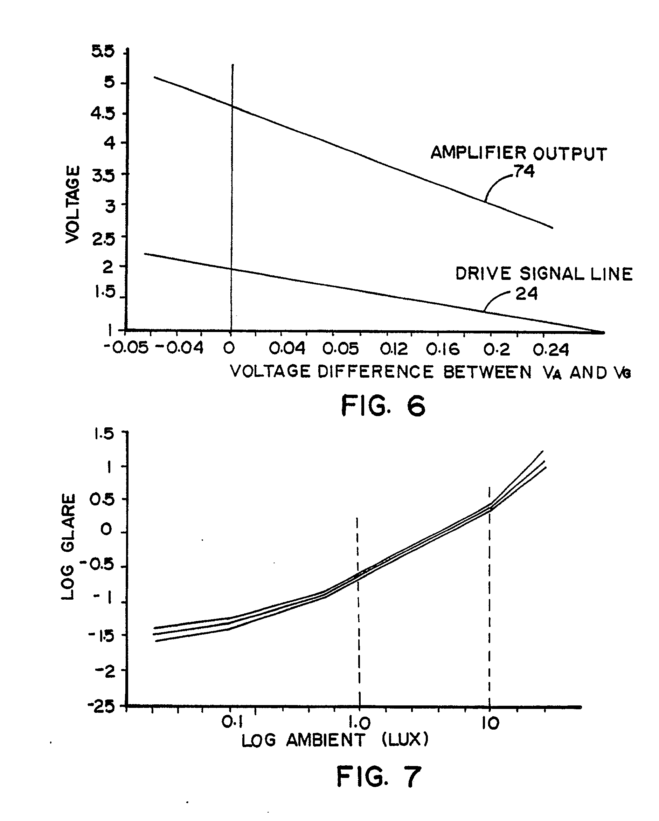

If $V_G$ is the signal level produced by rearward light sensor 14 and $V_A$ is the signal level produced by forward light sensor 12 then it is desired that a curve having the slope of one of the family of curves in Fig. 4 be produced when $V_A = V_R$. This represents the isoreflectivity curve of maximum reflectivity. Likewise small variations of $(V_A - V_G) = V_X$ optimally should produce a family of curves that closely matches those in Fig. 4. While it is computationally onerous to demonstrate that the circuit shown in general form in Fig. 2 meets this objective, a detailed embodiment illustrated in Fig. 5, which was constructed and tested in a sealed light box, produced the family of curves illustrated in Fig. 7.

In viewing the curves of constant reflectance of the reflectance element 28, or isoreflectivity curves, in Fig. 7, it can be observed that the family of curves have the desired flattened slopes at low ambient levels (below 1.0 lux) and increased slopes at high ambient levels (above 10.0 lux) characteristic of the ideal response illustrated in Fig. 4. While the family of isoreflectivity curves in Fig. 7 diverge from each other at both ends, they are substantially parallel and equally spaced throughout the range of ambient light levels from 0.25 to 10.0 lux. However, it has been discovered that the reflectance of variable reflectance element 28 must approximate the parallel lines of ideal mirror of Fig. 4 only for the approximate range of from 0.25-10.0 lux of ambient light. Below 0.25 lux of ambient, the desired action of the reflectance element is that of a bimodal mirror, which changes between a high reflectance and a low reflectance condition in response to the presence or absence of glare. Subtle variations in reflectance are neither helpful nor noticeable to the driver. Above 10.0 lux of ambient, the driver is relatively immune to glare and would, therefore, likewise not perceive anything but large changes in the reflected glare signal. Therefore, the mirror system in Fig. 5 will approximate the ideal model because the constant reflectance lines are parallel and equally spaced for all values of ambient between 0.25 and 10.0 lux, with a controlled amount of divergence from the ideal for levels of ambient less than 0.25 lux and greater than 10.0 lux.

By reference to Fig 5, mirror system 10' includes a control circuit 13' having a modulating bridge network 32, which includes a first leg 33 in parallel with a second leg 35. First leg 33 includes ambient light sensor 12 in parallel with a resistor 39 and in series with a resistor 34. Second leg 35 includes rearward light sensor 14 in series with resistors 36, 37 and 38. Parallel legs 33 and 35 are connected in parallel with each other and through a modulating resistor 40 to a VCC line 42 and through forward-biased diode 44 to signal ground line 46. Operation of such a bridge circuit 32 will be readily understood but is described in detail in our United States Patent Application Serial No. 177,614, filed April 5, 1988 by Keith Winston Molyneux et al. Bridge circuit 32 is based on the recognition that ambient light, which determines the driver's tolerance for glare, is influenced by more than merely the light level sensed by the forward-facing light sensor. Light from the rear of the vehicle, which is reflected by the mirror and other surfaces of the vehicle, adds to the light received from other directions to establish the driver's tolerance for glare. The function of modulating resistor 40 is to cause increases in light levels measured by rearward sensor 14 to increase the level of the ambient light signal. As more light strikes rearward sensor 14, its resistance decreases and the current through bridge arm 35 increases. Because this current also flows through modulating resistor 40, the increase in current in bridge arm 35 increases the voltage drop across modulating resistor 40 which decreases the voltage level of node 41, common to both arms 33, 35. The decrease in the voltage of node 41 reduces the voltage across forward light sensor 12, which appears on ambient light signal line 16′ as an increase in ambient light.

The rearward light signal on line 18′ is buffered by a unity gain amplifier 48 and provided to the inverting terminal 50 of differential-input operational amplifier 20′. A voltage dividing network consisting of resistors 52 and 53 is provided at the output of unity gain amplifier 48 to scale the rearward light signal. The ambient light signal on line 16′ is time-filtered by dynamic asymmetric filter 56. The operation of asymmetric filter 56 is described in our US-A-4,793,690, the disclosure of which is hereby incorporated herein by reference. Filter 56 responds to changes in the signal on line 16′ that represent an increase in the level of ambient light according to a rapid time constant and responds to changes in the signal on line 16′ that represent a decrease in ambient light according to a longer time constant. Thus, filter 56 models the response of the human eye to changes in ambient light. This occular-adapted ambient light signal is provided on a line 58 and is buffered by unity gain amplifier 60. Output 62, from amplifier 60, is connected through a resistor 64 to a network 66 including resistors 68, 69 and 70. Network 66 is connected between a regulated DC voltage line 90 and signal ground line 46 to produce a positive DC offset voltage that biases the output of amplifier 60 on line 72 to a higher level. Line 72 is connected to ground through a resistor 71 and to the noninverting input of amplifier 20′. The values of resistors 68, 69, 70 are selected to provide a positive DC offset for the ambient light signal in order to set the value of the reflectance of the reflective element 28 at 70% when ambient and glare light levels are equal. This represents the maximum reflectivity condition and is selected to coincide with point Z1 in Fig. 3 for equal levels of ambient and glare.

The gain of differential input amplifier 20′ is directly proportional to the resistance of resistor 22′ which is connected between inverting input terminal 50 and output terminal 74. Because amplifier 20′ produces an output which is a product of its gain and the difference between the signals at its input terminals 50, 72 and the value of gain is directly proportional to the resistance value of resistor 22′, the slope of the output of amplifier 20′ can be adjusted so that incremental changes of the drive signal produced by circuit 13 with respect to the difference between the ambient and rear light signals can be matched to the reflectivity vs. drive signal performance characteristics of the reflectance element. In this manner, reflective elements having various reflectance vs. voltage characteristics may be matched to the control circuit by adjusting the resistance value of resistor 22′. If a balanced response is desired from amplifier 20′ then the value of resistor 71 must be adjusted in tandem with resistor 22′. A balanced response is dependent only on the difference between the levels of the input signals irrespective of their absolute levels. However, absolute balance may not be required for all applications and, if not, only resistor 22′ need be modified.

A voltage divider, including resistors 76, 77 between output terminal 74 and signal ground line 46, produce a voltage signal at common junction 78, which is a scaled version of the output of amplifier 20′. The signal on junction 78 is buffered by a unity gain amplifier 80 whose output produced on line 24′ is connected with terminal 26 of variable reflectance element 28. The opposite terminal 30 of variable reflectance element 28 is connected to the output on line 25 of a unity gain amplifier 84 whose noninverting input terminal 86 is maintained at a fixed DC voltage level by connection with a voltage divider, including resistors 88, 89 connected in series between regulated voltage line 90 and signal ground line 46. Amplifier 84 is unity gain because of a direct feedback connection from its output to its inverting input 85. By this arrangement, amplifier 84 produces a constant positive DC voltage on its output terminal 82 established by the ratio of resistance value of resistors 88, 89. Terminal 30 of cell 28 is thus maintained at a constant positive DC offset voltage with respect to signal ground. In the illustrated embodiment, terminal 30 is maintained at a constant 0.6 volts DC but may be set at any value suitable for the cell used.

A transistor 92 is provided with its collector connected with terminal 72 and its emitter connected with signal ground line 46. The base of transistor 92 is connected through a dropping resistor to a terminal 94 which receives a positive voltage whenever the vehicle is placed in reverse gear. The positive voltage to the base of transistor 92, in response to the vehicle being placed in reverse gear, clamps the voltage on line 72 to a low level which forces the variable reflectance element 28 to a condition of maximum reflectivity whenever the vehicle is moving backward. A transistor 96 connected with its collector and emitter across lines 24 and 25, has its base connected through a line 98 to the collector of a transistor 100, whose emitter is connected to VCC line 42 and whose base is connected to a terminal 102 of a mode control switch 104. The wiper 106 of switch 104 is connected to ground such that, when wiper 106 contacts terminal 102, the base of transistor 100 is low, which causes transistor 100 to conduct and provide a positive voltage on line 98. This positive voltage provided to the base of transistor 96, in response to the mode switch being placed in the day-lock mode, causes transistor 96 to conduct to immediately bleed any charge from variable reflectance element 28 to rapidly force it into a maximum reflectivity condition. An opposite terminal 108 of switch 104 is connected to the junction between resistors 36 and 37. Whenever wiper 106 is placed in contact with terminal 108, the voltage on line 18' is reduced. This has the effect of causing the mirror system 10' to be forced to a night mode with element 28 having a low reflectance value.

Terminal 110, which is the source of power for mirror 10', is provided with a positive DC voltage whenever the vehicle is running. A transistor 91, in series between terminal 110 and line 90 and whose base is connected with terminal 102, produces a voltage on line 90, which feeds power to the active circuit components, such as the amplifiers. Line 102 is connected through a resistor 113 to the junction between a resistor 114 and zener diode 116 and is maintained at a constant voltage to, in turn, maintain a constant supply voltage to the circuit. When switch 104 is placed in the day-lock mode, the drop in voltage on line 102 turns off transistor 91 which immediately powers-down the amplifiers to remove any drive signal from being applied to variable reflectance element 28, concurrently with producing a short circuit across the element with transistor 96 as previously explained. A diode 122 provides reverse voltage protection and an MOV 124 protects against voltage surges. Diodes 126 and diode string 128 across lines 24, 25 provide voltage protection to variable reflectance element 28. A bleed resistor 101 dissipates any residual charge from reflectance element 28 when power is removed from terminals 110, 111.

Additional reflectance elements (not shown), such as door-mounted mirrors may be operated as part of mirror system 10'. Such additional reflectance elements are connected with terminals 135, 136. Therefore, the door-mounted mirrors receive the same drive signal as variable reflectance element 28 and are, accordingly, glare-protected.

The output of amplifier 20' on line 74 and the output of the control circuit on line 24' are illustrated in Fig. 6 as a function of the voltage difference between the ambient light signal on line 16' and rearward light signal on line 18'. It can be seen that, when the value of the signals are equal, which corresponds to a desired reflectance value of approximately 70%, the output on line 24' is approximately two volts. As the glare light level increases with relationship to the ambient light signal level, the voltage on line 24' decreases in a linear fashion. Because the opposite terminal 30 of element 28 is clamped at positive 0.6 volts DC, the voltage across element 28 will vary between approximately -0.6 volts at low glare, high ambient conditions to +1.5 volts at high glare, low ambient condition. This example is for cells having electrochromic coatings. Other types of cells, such as electrochemichromic, would operate at different voltages.

The ability to provide a negative voltage across variable reflectance element 28 provides rapid and definite bleaching of the cell when high reflectance is desired. The combination of the offset provided to the ambient light signal by offset circuit 21 and the gain established by the resistance value of resistor 22' causes the system to tend to operate between points Z1 and Z2 on the chart in Fig. 3 during ambient light levels of between 0.25 and 10.0 lux, which, in conjunction with other elements of circuit 13, produces the favourable results illustrated in Fig. 7.

By reference to Fig. 7, it can be observed that between 0.25 and 10.0 lux of ambient light, the constant reflectivity lines are substantially parallel and evenly offset. While the lines diverge slightly below 0.25 lux and above 10.0 lux, the need for following the ideal model diminishes outside of this range, as previously set forth. Within that range, however, for a given ambient level, an increase in glare will cause the voltage level on line 18' to decrease, which will increase the output signal level of subtracting amplifier 20' if the glare level is constant. This causes the drive signal applied to the terminals of reflective element 28 to decrease, which increases the reflectance level of the mirror at a time rate that would correspond to the adaptation of the eye to the change in ambient level, which increases the glare tolerance of the driver.

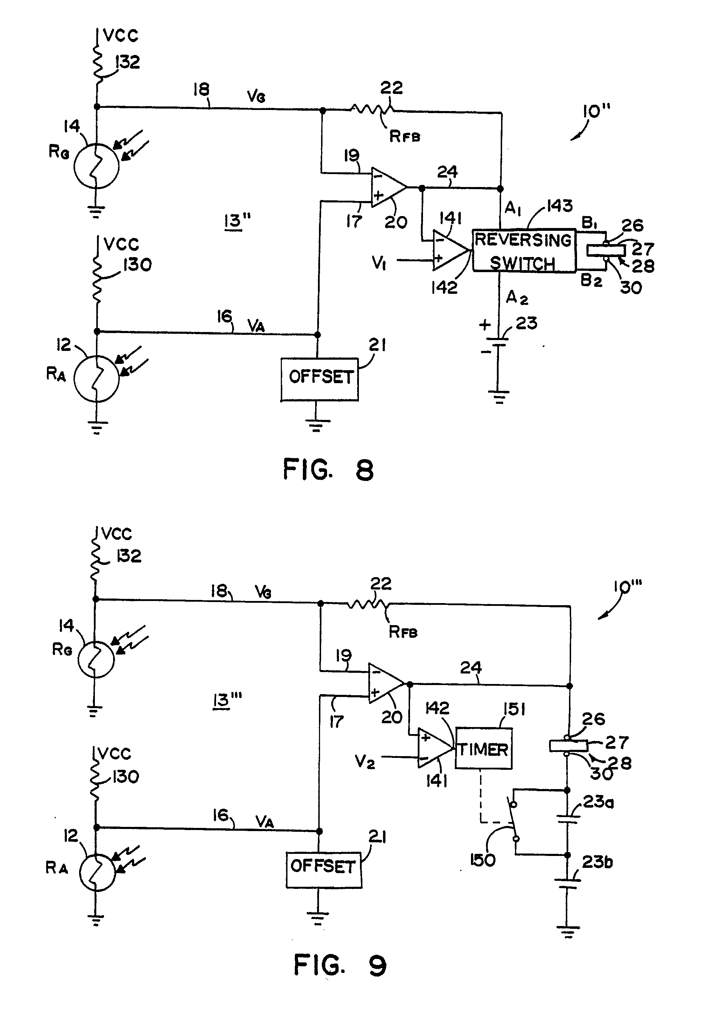

One difficulty experienced primarily in electrochemichromic cells is the tendency of reactant products to migrate toward the terminals of the cell as a result of the DC field established by the drive current and voltage. The effect is not totally reversed when the cell is bleached, resulting in a noticeable band of residual coloration in portions of the cell. In order to overcome this difficulty, the mirror system 10" in Fig. 8 reverses the polarity of the drive signal to the variable reflectance element every time the system goes from a bleached to a coloured condition. This is possible because variable reflectance element 28" colours in response to the absolute magnitude of the drive signal irrespective of its polarity.

In the embodiment illustrated in Fig. 8, a comparator 141 has a noninverting input connected to output line 24 from amplifier 80 and an inverting input connected to a fixed voltage level $V_1$. Output 142 of the comparator is provided as an input to a reversing switch 143. Reversing switch 143 includes a pair of input terminals $A_1$, $A_2$ connected respectively with output line 24 and signal ground. Reversing switch 143 additionally includes a pair of output terminals $B_1$, $B_2$ connected with terminals 26, 30 of element 28. Reversing switch 143 in one state has inputs $A_1$, $A_2$ connected with outputs $B_1$, $B_2$, respectively, and in an alternate state has inputs $A_1$, $A_2$ connected with outputs $B_2$, $B_1$, respectively. Reversing switch 143 reverses states when a negative trending pulse is received from comparator 141.

In operation, when the condition of circuit 13" causes amplifier 20 to produce an output signal less than $V_1$, which represents a maximum reflectivity state, the output of comparator 141 switches from a positive to a negative level which causes reversing switch 143 to reverse the interconnectors between input terminals $A_1$, $A_2$ and output terminals $B_1$, $B_2$. In this manner, the signal applied to the terminals 26, 30 of element 28 will reverse polarity after every time the element is "bleached" to a maximum reflectance condition. Because variable reflectance element 28" is of the type that adjusts the reflectivity based on amplitude of the drive signal, regardless of polarity, this reversing of drive signal polarity will tend to reduce the tendency of chemical reaction by-products to accumulate within element 28.

While the mirror system in Fig. 8 reduces the tendency for accumulation of reaction by-products, there is a further necessity to increase the speed of response of the variable reflectance element to changes in the desired reflectance level resulting from changes in the ambient and/or glare light intensities. In order to improve the response of the mirror system 10''' to a desired bleach condition, or maximum reflectivity, the circuit in Fig. 9 responds to the output on line 24 of amplifier 20 decreasing below a predetermined voltage level $V_2$, indicative of a maximum reflectivity condition, by momentarily superimposing a negative voltage on the drive signal to cell 28'''.

Referring to mirror system 10''', illustrated in Fig. 9, a shorting switch 150 around an offset device 23a in circuit 13''' is opened by the output of a timer 151 for a predetermined period of time in response to output 24 of amplifier 20, producing a desired reflectivity signal on line 24 that is less than $V_2$, which indicates a desired "bleached", or maximum, reflectivity condition. The offset provided by offset device 23a is selected to provide a significant negative voltage voltage across terminals 28, 30 of reflectance element 28 when switch 150 is open.

In operation, when the level of the output of amplifier 20 decreases to $V_2$, which is a maximum reflectivity output level, the output change from comparator 141 causes timer 151 to open switch 150 for a predetermined period of time. When switch 150 opens, the signal level across terminals 26, 30 of element 28 goes more negative by the amount of offset provided by device 23a minus the level of $V_2$. After timer 151 times out, switch 150 closes, which causes the signal level across terminals 26, 30 to rise to the maximum reflectivity signal level $V_2$. The brief negative signal across terminals 26, 30 causes a raped bleaching of element 28. However, by only applying such negative signal for a brief period of time, such as two seconds, a recolouration of the cell as a result of the negative voltage is avoided.

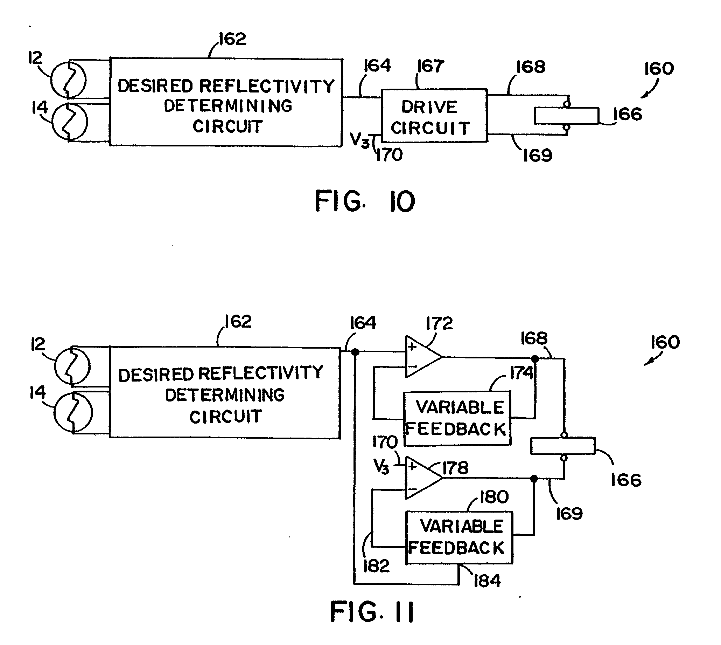

While the mirror system, illustrated in Fig. 9, is capable of improving significantly the rate at which the variable reflectance element bleaches to a maximum reflectivity condition, it does not per se improve the speed of response for a bleaching to an intermediate reflectivity condition nor does it increase the speed of coloration of the mirror to a lower reflectivity condition. The embodiments illustrated in Figs. 10-12 address the speed of response problem for substantially all changes of the desired reflectivity of the variable reflectance element, including small and large changes and changes in either direction of reflectivity. By reference to Fig. 10, a mirror system 160 includes a circuit 162 which receives inputs from forward light sensor 12 and rearward light sensor 14 and produces an output on line 164, which indicates the desired reflectance condition of variable reflectance element 166. Circuit 162 could correspond to that illustrated in Fig. 5 or could be any system which produces an output signal on line 164 that is responsive to the intensity of light sensed by sensors 12 and 14. A drive circuit 167 receives the desired reflectance signal from line 164 and applies a drive signal on lines 168 and 169 to variable reflectance element 166. Drive circuit 167 additionally receives a constant voltage input $V_3$ on line 170.

When the desired reflectance signal on line 164 is quiescent, the drive signal on line 168 is equal to the signal on line 164. Likewise, when the signal on line 164 is quiescent, the drive signal on line 169 is equal to the constant signal on line 170. However, when the desired reflectance signal on line 164 changes, the drive circuit 167 temporarily offsets the input signal on one of lines 168 and 169 in order to temporarily offset the input signal applied to variable reflectance element 166. The temporary offset is in the direction of change of the variable reflectance signal. Therefore, if the signal level on line 164 increases, the signal applied to element 166 will be offset in the increased direction for a brief period of time. This is accomplished by producing an offset on line 168. If the level of the desired reflectance signal on line 164 decreases, then a temporary offset tending to decrease the signal applied to element 166 is produced for a brief period of time. This is accomplished in the illustrated embodiment by producing an offset on line 169 for a brief period of time. The length of the offset is chosen to be less than the time required for the reflectance condition of element 166 to approach the new desired reflectance level. Additionally, the input signal to element 166 as increased by the offset may temporarily exceed the safe operating level of the variable reflectance. However, because of the temporary nature of the offset, damage to element 166 is avoided.

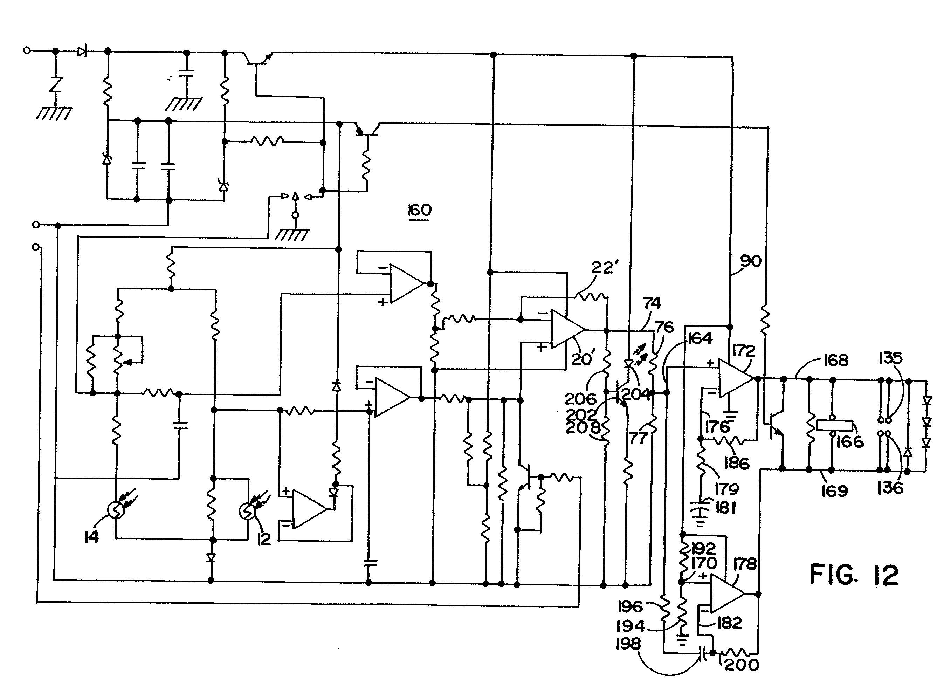

Operation of drive circuit 167 is illustrated by reference to Fig. 11. Line 164 is provided to the non-inverting input of an operational amplifier 172. Amplifier 172 produces an output on lid 168 as a drive signal to variable reflectance element 166. A variable feedback element 174 is connected between line 168 and the inverting input 176 to amplifier 172. Constant signal $V_3$ is provided on line 170 to the non-inverting input of an operational amplifier 178. The output of amplifier 178 is provided on line 169 as an input signal to element 166. A variable feedback element 180 is connected between output line 169 and the inverting input 182 of amplifier 178. Variable feedback element 180 additionally receives the desired reflectance level signal from line 164 at an input 184.

Variable feedback elements 174 and 180 are selected in order to cause amplifiers 172 and 178 to normally operate as unity gain amplifiers. Although a short-circuit feedback is typically required for providing a unity gain amplifier, the impedance of amplifiers 172 and 178 is sufficient to operate as unity gain even with a substantial impedance in variable feedback elements 174 and 178. As along as amplifiers 172 and 178 are operating as unity gain, the drive signal on line 168 is at the same level as the desired reflectance signal on line 164 and the drive signal on line 169 is at the same level as constant signal $V_3$ on line 170. When the signal on line 164 increases, the output on line 168 increases. Variable feedback element 174 is sensitive to the level of signal on line 168 and responds by temporarily increasing the gain of amplifier 172. The increase in gain is temporary and causes the drive signal on line 168 to be amplified with respect to the desired reflectance signal on line 164 which further increases the signal on line 168. The increased gain from variable feedback device 174 immediately begins to decrease to unity gain. Once variable feedback device 174 returns amplifier 172 to unity gain, the signal on line 168 is the same as the desired reflectance signal on line 164. An increase in the desired reflectance signal does not produce a significant effect on the output 169 of amplifier 178 which cannot drop below signal ground. Therefore, the drive signal on line 169 remains at the level of $V_3$.

When the desired reflectance signal on line 164 decreases, the change in the input 184 to variable feedback device 180 temporarily increases the gain of amplifier 178. This increases the signal on line 169 because the change is coupled to inverting input 182 and the difference between the inputs on lines 170, 182 is multiplied by the gain of amplifier 178. With the drive signal on line 169 temporarily increased, the effect of the decreasing desired reflectance signal on line 168 is augmented by a negative offset induced by the increase on the signal on line 169. Thus, it is seen that the drive signal applied to element 166 receives a temporary offset in the direction of movement of the desired reflectance signal whether the direction of movement is in the direction of the desired reflectance signal is in the direction increasing the desired reflectance signal, which decreases the reflectance of element 166 or decreasing in the desired reflectance signal on line 164 which increases the reflectance of the element 166.

A detailed embodiment of the circuit illustrated in Fig. 11 is shown in Fig. 12. Unmarked elements are the same as those illustrated in Fig. 5 and, as explained with respect to Fig. 5, the output of differential input operational amplifier 20 on line 74 is a function of the rearward light signal sensed by sensor 14 and the intensity of light in a direction other than rearward of the vehicle sensed by sensor 12. Output 74 is scaled by resistor 76 and 77 in order to produce a signal on line 164, which represents the desired reflectance level of the mirror. Line 164 is connected with the non-inverting input of operational amplifier 172 whose output produced on line 168 is connected through a feedback resistor 186 to the inverting input 176 of the amplifier. Line 176 is additionally connected through a resistor 178 and capacitor 180 to signal ground. Resistor 186 is selected to have a resistance value that will be in the range sufficient to cause amplifier 172 to be unity gain. When the desired reflectance signal on line 164 increases, the resulting increase in the output on line 168 will tend to increase the voltage on inverting input 176. However, because the voltage across capacitor 180 cannot instantaneously change, no voltage increase will be experienced on line 176. The difference in voltage between line 168 and 176 increases the gain of amplifier 172. As capacitor 180 charges, the voltage on line 176 will approach that of line 168. As it does, the gain of amplifier 172 returns to essentially unity. Therefore, for increases in the voltage on line 164, the gain of amplifier 172 temporarily increases to a value equal to the sum of the resistances of resistors 178 and 186 divided by the resistance of resistor 178. The temporary increase in gain is determined by the time constant of the resistance of resistors 178 and 186, after which the gain of amplifier 172 returns to unity.

A pair of resistors 192, 194 connected in series with constant voltage line 90, establish a constant voltage level on line 170 which is connected with the non-inverting input of amplifier 178. In the illustrated embodiment, the voltage on line 170 is selected at 0.2 volts. However, this voltage is dependent upon the type of electrochromic cell used for element 166. Desired reflectance signal line 164 is connected through a resistor 196 and capacitor 198 to inverting input line 182 of amplifier 178. A feedback resistor 200 is connected between line 169, which receives the output from amplifier 178, and input line 182. As previously set forth, amplifier 178 amplifies the constant voltage signal on its input line 170. When the desired reflectance signal level on line 164 is quiescent, amplifier 178 amplifies the constant level signal on line 170 by a unity gain to provide a positive offset to one terminal of element 166. When the level of the signal on line 164 decreases, the input on line 182 to amplifier 178 is momentarily decreased, which increases the gain of amplifier 178 and thus produces a higher signal output on line 169. As the voltage across capacitor 198 charges, the voltage on line 182 will increase to return the gain of amplifier 168 to unity, which will bring the voltage on line 169 back to the level of the constant voltage on line 170. Therefore, mirror system 160 responds to decreases in the voltage level on desired reflectance signal line 164 by momentarily increasing the voltage on line 169 which has the effect of adding a negative offset to the decreasing desired reflectance drive signal applied to element 166. This negative offset enhances the action of the decreasing voltage across element 166 in increasing the speed of colouration of the element. In this embodiment, an indication LED 204 is actuated from output 74 of amplifier 20 through a transistor 202 biased as an amplifier by resistors 206 and 208. Thus, LED 204 has a variable intensity to indicate the reflectivity level of element 166.

While the invention has been illustrated with sensors 12, 14 arranged in a bridge circuit with a modulating resistor 40, other arrangements are possible. For example, the rear and ambient light signals could be provided by independent forward and rear sensors which do not account for the influence of light from rearward of the vehicle on the ambient light signal. A drive circuit according to the invention will therefore accommodate the design goal of the designer while approximating the ideal response of a continuously variable reflectance element. Light sensors that do not have the characteristics of cadmium sulphite photo resistor sensors could be utilized by amplifying their signals with specially configured nonlinear amplifiers, such as logarithmic amplifiers.

Typical values of components used are as follows:

| Reference Number | Value (Ohms) | |
|---|---|---|
| Resistor | 22 | 750K |
| Resistor | 34 | 47K |
| Resistor | 36 | 12K |
| Resistor | 37 | 470K (variable) |
| Resistor | 38 | 8.2K |
| Resistor | 39 | 560K |
| Resistor | 40 | 22K |
| Resistor | 52 | 2.2K |
| Resistor | 53 | 2.2K |
| Resistor | 54 | 47K |
| Resistor | 64 | 100K |
| Resistor | 68 | 3.3K |
| Resistor | 69 | 270 |
| Resistor | 70 | 100K |
| Resistor | 71 | 750K |
| Resistor | 76 | 7.5K |
| Resistor | 77 | 5.6K |
| Resistor | 101 | 120 |
| Resistor | 178 | 10K |
| Resistor | 186 | 22K |
| Resistor | 196 | 3.9K |
| Resistor | 200 | 22K |
| Capacitor | 180 | 47uf |
| Capacitor | 198 | 220uf |

The invention may be defined in various ways certain of which have initially been selected in the claims. Other approaches to the invention which may be made are set out in the following clauses which are included for disclosure purposes and which are not at present claimed but which may be included in claims at a later stage of prosecution.

Clause 1. An automatic rearview mirror system for a vehicle comprising:

a reflective element having a pair of input terminals and variable light attenuating means for attenuating a portion of light directed into the reflective element as a function of the light transmittance value of said attenuating means, wherein said transmittance value varies as a function of input signals applied to said input terminals, the relationship between said light transmittance value and said input signals defined by a performance characteristic of said variable light attenuating means;

ambient light sensing means for producing an ambient light signal indicative of the intensity of ambient light;

rear light sensing means for producing a rear light signal indicative of the intensity of light directed into the reflective element independent of said transmittance value of said light attenuating means;

difference amplifier means connected with said ambient and rear light sensing means for producing an output signal that is a function of the difference between said ambient light signal and said rear light signal;

means for providing said output signal to one of said input terminals such that the transmittance value of said reflective element is a function of said output signal.

Clause 2. The automatic rearview mirror system of clause 1 further including gain control means for establishing a gain value for said amplifier such that said output signal is a function of the multiplication product of said gain value and said difference between said ambient light signal and said rear light signal.

Clause 3. The automatic rearview mirror system of clause 2 wherein said gain value is selected as a function of said performance characteristic of said variable light attenuating means.

Clause 4. The automatic rearview mirror system of clause 3 wherein the relationship between said transmittance value and said input signal includes a first value of said relationship within a first range of values of said input signal and a second different value of said relationship within a second range of values of said input signal and wherein said mirror system further includes first offset means for producing a first offset signal and applying said first offset signal to said ambient light signal in order to cause said input signal to operate substantially only within one of said range of values.

Clause 5. The automatic rearview mirror system of any of clauses 1 to 4 wherein the relationship between said transmittance value and said input signal includes a first value of said relationship within a first range of values of said input signal and at a second rate within a second range of values of said input signal and a second different value of said relationship within a second range of values of said input signal and wherein said mirror system further includes first offset means for producing a first offset signal and applying said first offset signal to said ambient light signal in order to cause said output signal to operate substantially only within one of said range of values.

Clause 6. The automatic rearview mirror system of clause 5 further including second offset means for producing a second offset signal and applying said second offset signal to the other one of said input terminals in order to adjust the value of the signal applied to said input terminals as a function of said output signal.

Clause 7. The automatic rearview mirror system of any of clauses 1 to 6 in which said ambient light sensing means includes a first sensor having a parameter that varies in response to the intensity of light received by said ambient light sensing means, said rear light sensing means includes a second sensor having a parameter that varies in response to the intensity of light received by said rear light sensing means and said mirror system further including a modulating resistor, wherein said first and second sensors are connected in parallel with one another and in series with said modulating resistor between a pair of supply voltage terminals, said ambient light signal being a function of said parameter of said first sensor and said rear light signal being a function of said parameter of said second sensor such that a change in said parameter of said second sensor will modify said ambient and said rear light signals.

Clause 8. The automatic rearview mirror system of clause 7 further including time-filtering means for time-filtering said ambient light signal, said time-filtering means providing faster time-filtering of the signal during periods of increasing ambient light than during periods of decreasing ambient light.

Clause 9. An automatic rearview mirror system for a vehicle comprising:

a reflective element having a pair of input terminals and variable light attenuating means for attenuating a portion of light directed into the reflective element as a function of the transmittance value of said attenuating means, wherein said transmittance value varies as a function of input signals applied to said input terminals;

ambient light sensing means for producing an ambient light signal indicative of the ambient light seen by the vehicle driver;

rear light sensing means for producing a rear light signal indicative of light directed into the reflective element;

control circuit means responsive to said ambient light signal and said rear light signal for producing an output signal and providing said output signal to said terminals in order to determine the value of transmittance of said attenuating means; and

biasing means for adjusting the relationship between the input signal applied to said input terminals and the value of said ambient and rear light signals. Clause 10. The automatic rearview mirror system of clause 9 in which said biasing means includes means for applying a predetermined signal level to one of said ambient and rear light signals.

Clause 11. The automatic rearview mirror system of clause 10 in which said biasing means includes means for applying another predetermined signal level to one of said terminals of said reflective element.

Clause 12. The automatic rearview mirror system of clause 11 in which said biasing means includes means for applying a predetermined signal level to one of said terminals of said reflective element.

Clause 13. The automatic rearview mirror system of any of clauses 9 to 12 in which said control means includes a difference amplifier having an inverting input and a noninverting input and wherein said ambient light signal is applied to said noninverting input and said rear light signal is applied to said inverting input and further wherein said biasing means includes means for adding a predetermined offset level to the ambient light signal applied to said noninverting input.

Clause 14. The automatic rearview mirror system of clause 13 wherein said output signal is applied to a first one of said terminals and said biasing means further includes means for applying another predetermined signal level to a second one of said terminals.

Clause 15. The automatic rearview mirror system of any of clauses 9 to 12 wherein said control circuit means includes a difference amplifier having an inverting input connected to receive said rear light signal, a noninverting input connected to receive said ambient light signal, an output and a gain establishing means for establishing a gain value such that a signal on said output is equal to the product of the gain value and the difference between said ambient light signal and said rear light signal, and wherein said gain establishing means establishes said gain value at a value that will cause said signal on said output to change with respect to the difference between said ambient and rear light signals according to a relationship that matches a performance characteristic of said reflectance element.

Clause 16. An automatic rearview mirror system for a vehicle comprising:

a reflective element having a pair of input terminals and variable light attenuating means for transmitting a portion of light directed into the reflective element as a function of the transmittance value of said attenuating means, wherein said transmittance value varies with respect to an input signal applied to said input terminals according to a defined performance characteristic;

ambient light sensing means for producing an ambient light signal indicative of the ambient light seen by the vehicle driver;

rear light sensing means for producing a rear light signal indicative of light directed into the reflective element; and

control circuit means responsive to said ambient light signal and said rear light signal for producing output signal and providing said output signal to said terminals in order to determine the value of transmittance of said attenuating means, said control circuit means including a difference amplifier having an inverting input connected to receive said rear light signal, a noninverting input connected to receive said ambient light signal, a gain establishing means for establishing a gain value such that said output signal is equal to the product of the gain value and the difference between said ambient light signal and said rear light signal, and wherein said gain establishing means establishes said gain value at a value that will cause said output signal to change with respect to the difference between said ambient and rear light signals in a manner that substantially matches said performance characteristic of said reflective element.

Clause 17. The automatic rearview mirror of clause 16 wherein the relationship between said transmittance value and an input signal applied to said terminal includes a first value of said relationship within a first range of values of said input signal and a second different value of said relationship within a second range of values of said input signal and said mirror system further includes biasing means for causing said output signal to vary substantially only within one of said first and second ranges.

Clause 18. The automatic rearview mirror of clause 17 in which said biasing means includes means for applying a predetermined offset level to one of said ambient and rear light signals and, possibly, means includes means for applying another predetermined offset level to one of said terminals of said reflective element.

Clause 19. The automatic rearview mirror of any of clauses 16 to 18 in which said rear light sensor is

12

positioned such that said rear light signal is independent of the transmittance value of said light attenuating means.

Clause 10. An automatic rearview mirror system for a vehicle comprising:

a reflective element having a reflectance condition that varies as a function of an input signal applied to said reflective element;

ambient signal generating means for producing an ambient signal indicative of the ambient light;

rear light signal generating means for producing a rear light signal indicative of light rear of the vehicle;

circuit means responsive to said ambient and rear light signals for producing an indication of the desired reflectance condition of said reflective element; and

drive means for applying an input signal to said reflective element as a function of said indication, said drive means including means for temporarily offsetting said input signal from a value of said input signal that corresponds to the desired reflectance condition of said reflective element to increase the rate of change of said reflectance condition of the reflectance element.

Clause 21. The automatic rearview mirror system of clause 20 wherein said input signal is temporarily offset by said drive means in the direction of change in said indication.

Clause 22. The automatic rearview mirror system of clause 20 or clause 21 further including means responsive to said indication having a value representing a maximum reflective condition of said reflective element for altering the polarity of said input signal applied to said reflective element.

Clause 23. The automatic rearview mirror system of any of clauses 20 to 22 wherein said mirror system is adapted to operating between a maximum reflectance mode in which light incident the reflectance element is substantially unattenuated and a reduced reflectance mode in which light incident the reflectance element is significantly attenuated and wherein said circuit means is adapted to producing a first indication when said maximum reflectance mode is desired and a second indication when said reflectance mode is desired and further wherein said input signal is temporarily offset by said drive means beyond a value of said input signal that corresponds to said first indication in response to said first indication and is temporarily offset by said drive means beyond a value of said input signal that corresponds to said second indication in response to said second indication.

Clause 24. The automatic rearview mirror system of clause 23 wherein said reflective element is capable of withstanding a constant predetermined level of said input signal and wherein said input signal is temporarily offset beyond said predetermined level by said input means.

Clause 25. The automatic rearview mirror system of any of clauses 20 to 22 wherein the reflective condition of said reflective element is variable to a multiplicity of reflective states and wherein said indication is essentially continuously variable and further wherein said input signal is temporarily offset by said drive means in the direction of change in said indication.

Clause 26. The automatic review mirror system of clause 25 wherein said reflective element is capable of withstanding a constant predetermined level of said input signal and wherein said input signal is temporarily offset beyond said predetermined level by said input means.

Clause 27. The automatic rearview mirror system of clause 25 or clause 26 wherein said indication is substantially independent of the reflectance condition of said reflective element.

Clause 28. The automatic rearview mirror system of clause 27 wherein said circuit means produces said indication as a function of the difference between said ambient light signal and said rear light signal.

Clause 29. The automatic rearview mirror system of clause 28 wherein said circuit means includes time-filtering means for time-filtering said ambient light signal, said time-filtering means providing faster time-filtering of the ambient signal during periods of increasing ambient light, than during periods of decreasing ambient light.

Clause 30. An automatic rearview mirror system for a vehicle comprising:

a reflective element having a reflectance condition that varies as a function of an input signal applied to said reflective element;

ambient signal generating means for producing an ambient signal indicative of the ambient light;

rear light signal generating means for producing a rear light signal indicative of light rear of the vehicle;

circuit means responsive to said ambient and rear light signals for producing a desired reflectance signal indicative of the desired reflectance condition of said reflective element; and

drive means responsive to said desired reflectance signal for producing an input signal applied to said reflective element, said drive means being responsive to changes in said desired reflectance signal to modify the relationship between said desired reflectance signal and said input signal applied to said reflective element.

Clause 31. The automatic rearview mirror system of clause 30 wherein said drive means includes amplifier means for amplifying said desired reflectance signal by a gain of said amplifying means to

13

produce said input signal applied to said reflective element and including means for modifying said gain in response to changes in said indication.

Clause 32. The automatic rearview mirror system of clause 31 wherein said modifying means temporarily increases said gain in response to changes in said desired reflectance signal.

Clause 33. The automatic rearview mirror system of any of clauses 30 to 32 wherein said circuit means produces said desired reflectance signal as a function of the difference between said ambient light signal and said rear light signal and wherein said desired reflectance signal is substantially independent of the reflectance condition of said reflective element.

Clause 34. The automatic rearview mirror system of clause 33 wherein said circuit means includes time-filtering means for time-filtering said ambient light signal, said time-filter means providing faster time-filtering of the ambient signal during periods of increasing ambient light, than during periods of decreasing ambient light.

Clause 35. The automatic rearview mirror system of any of clauses 30 to 34 wherein said reflective condition of said reflective element is variable to a multiplicity of reflective states and wherein said desired reflectance signal is essentially continuously variable and further wherein said input signal is temporarily offset by said drive means, in the direction of change in said indication.

Clause 36. An automatic rearview mirror system for a vehicle comprising:

a reflective element having a pair of input terminals and variable light attenuative means for attenuating a portion of light directed into the reflective element as a function of the light transmittance value of said attenuating means, wherein said transmittance value varies as a function of input signals applied to said input terminals;

rear light sensing means for producing a rear light signal indicative of the intensity of light rearward of said reflective element;

ambient light sensing means for producing an ambient light signal indicative of the intensity of light in a direction other than rearward of said reflective element;

circuit means responsive to said rear and ambient light signals for producing a desired reflectance signal indicative of the desired reflectance condition of said reflectance element; and

drive means responsive to said output signal for producing first and second input signals applied to said terminals, said drive means being responsive to changes in said desired reflectance signal to temporarily modify the relationship between said desired reflectance signal and said input signals.

Clause 37. The automatic rearview mirror system of clause 36 wherein said drive means includes first amplifying means for amplifying said desired reflectance signal by a first gain to produce a first input signal applied to one of said input terminals and first modifying means for modifying said first gain in response to changes in said desired reflectance signal.

Clause 38. The automatic rearview mirror system of clause 37 wherein said drive means further includes means for producing a constant signal, second amplifying means for amplifying said constant signal by a second gain to produce a second input signal applied to the other one of said input terminals and second modifying means for modifying said second gain in response to changes in said desired reflectance signal.

Clause 39. The automatic rearview mirror system of clause 38 wherein said first amplifying means includes a first amplifier having first and second inputs and a first output port from which a first output signal is produced and wherein said first gain is determined by a first feedback means between said first output port and said first input for feeding a portion of said first output signal to said first input, said desired reflectance signal being connected with said second input, and further wherein said first modifying means includes a resistance-capacitance network connected with said feedback means.

Clause 40. The automatic rearview mirror system of clause 38 or clause 39 wherein said second amplifying means includes a second amplifier having third and fourth inputs and a second output port from which a second output signal is produced and wherein said second gain is determined by a second feedback means between said second output port and said third input for feeding a portion of said second output signal to said third input, said constant signal being connected with said fourth input, and further wherein said second modifying means includes a second resistance-capacitance network connected with said second feedback means, said desired reflectance signal being connected with said second resistance-capacitance network.

Clause 41. The automatic rearview mirror system of any of clauses 37 to 40 wherein said first amplifying means includes a first amplifier having first and second inputs and a first output port from which a first output signal is produced and wherein said first gain is determined by a first feedback means between said first output port and said first input for feeding a portion of said first output signal to said first input, said desired reflectance signal being connected with said second input, and further wherein said first

EP 0 426 503 A1

modifying means includes a resistance-capacitance network connected with said feedback means.

**Claims**

1. An automatic rearview mirror system (10,10´) for a vehicle comprising: a reflective element having a reflectance condition that varies as a function of an input signal applied to said element, the relationship between said reflectance condition and said input signal being defined by a performance characteristic of said reflective element; ambient light signal generating means (12) for producing an ambient light signal indicative of the ambient light; rearward light signal generating means (14) for producing a rearward light signal indicative of light rear of the vehicle; and control means (13) responsive to said rear and ambient light sensing means for producing an output signal and applying said output signal to said reflective element, wherein said output signal is a function of the difference between said ambient light signal and said rearward light signal and wherein said output signal is substantially independent of the reflectance condition of said reflective element.

2. An automatic rearview mirror system according to claim 1 wherein said control means further includes gain determining means for establishing a gain value and wherein said output signal is a function of the product of said gain value and said difference between said ambient light signal and said rearward light signal.

3. An automatic rearview mirror system according to claim 2 wherein said gain determining means establishes said gain value as a function of said performance characteristic of said reflective element.

4. An automatic rearview mirror system in according to any of claims 1 to 3 wherein the relationship between said reflectance condition and said input signal includes a first value for said relationship within a first range of values of said input signal applied to said reflective element and a different value of said relationship within a second range of values of said input signal and wherein said control means includes first offset means for producing a first offset signal and for combining said first offset signal with said ambient light signal in order to cause said input signal to operate within one said range of values.

5. An automatic rearview mirror system according to claim 4 further including second offset means for producing a second offset signal and for applying said second offset signal to said reflective element in order to adjust the value of the input signal applied to said reflective element as a function of said output signal.

6. An automatic rearview mirror system according to claim 1 further including offset means for producing an offset signal and for applying said offset signal to said reflective element in order to adjust the value of the input signal applied to said reflective element as a function of said output signal.

7. An automatic rearview mirror system according to any of claims 1 to 6 in which said ambient light signal generating means includes forward light sensing means for sensing light in a direction other than rearward of the mirror and means for modifying the output of said forward light sensing means to produce a modified forward light signal that is a function of the level of said rearward light signal.

8. An automatic rearview mirror system according to claim 7 where in said control means includes time-filtering means for time-filtering said modified forward light signal, said time-filter means providing faster time-filtering of the modified forward light signal during periods of increasing ambient light, than during periods of decreasing ambient light.

9. An automatic rearview mirror system according to any of claims 1 to 8 wherein the reflective element comprises variable light attenuating means for attenuating a portion of light directed into the reflective element as a function of the light transmittance value of said attenuating means, the transmittance value varying as a function of the input signal.

10. An automatic rearview mirror system according to any of claims 1 to 9 in which the control means includes difference amplifier means connected with said ambient and rearward light signal generating means for producing the output signal.

11. An automatic rearview mirror system for a vehicle according to claim 1 in which the control means includes a difference amplifier having an inverting input connected to receive said rearward light signal, a noninverting input connected to receive said ambient light signal, a gain establishing means for establishing a gain value such that said output signal is equal to the product of the gain value and the difference between said ambient light signal and said rearward light signal, and wherein said gain establishing means establishes said gain value at a value that will cause said output signal to change with respect to the difference between said ambient and rearward light signals in a manner that substantially matches said performance characteristic of said reflective element.

12. An automatic rearview mirror according to claim 11 in which the relationship between said transmittance

15

value and an input signal applied to said element includes a first value of said relationship within a first range of values of said input signal and a second different value of said relationship within a second range of values of said input signal and said mirror system further includes biasing means for causing said output signal to vary substantially only within one of said first and second ranges.

13. An automatic rearview mirror according to claim 12 in which said biasing means includes means for applying a predetermined offset level to one of said ambient and rear light signals.

14. An automatic rearview mirror according to claim 13 in which said biasing means includes means for applying another predetermined offset level to one of said terminals of said reflective element.

15. An automatic rearview mirror according to any of claims 1 to 14 in which said rearward light sensor is positioned such that said rearward light signal is independent of the reflectance condition of said reflective element.

16. An automatic rearview mirror system according to claim 1 in which the control means produces an indication of the desired reflectance condition of said reflective element, and includes drive means for applying as the input signal to said reflective element a signal which is a function of said indication, said drive means including means for temporarily offsetting said input signal from a value of said input signal that corresponds to the desired reflectance condition of said reflective element to increase the rate of change of said reflectance condition of the reflectance element.

17. An automatic rearview mirror system according to claim 16 wherein said input signal is temporarily offset by said drive means in the direction of change in said indication.

18. An automatic rearview mirror system according to claim 16 or claim 17 further including means responsive to said indication having a value representing a maximum reflective condition of said reflective element for altering the polarity of said input signal applied to said reflective element.

19. An automatic rearview mirror system according to claim 16 or claim 17 or claim 18 wherein said mirror system is adapted to operate between a maximum reflectance mode in which light incident the reflectance element is substantially unattenuated and a reduced reflectance mode in which light incident the reflectance element is significantly attenuated and wherein said circuit means is adapted to producing a first indication when said maximum reflectance mode is desired and a second indication when said reduced reflectance mode is desired and further wherein said input signal is temporarily offset by said drive means beyond a value of said input signal that corresponds to said first indication in response to said first indication and is temporarily offset by said drive means beyond a value of said input signal that corresponds to said second indication in response to said second indication.

20. An automatic rearview mirror system according to claim 19 wherein said reflective element is capable of withstanding a constant predetermined level of said input signal and wherein said input signal is temporarily offset beyond said predetermined level by said input means.

21. An automatic rearview mirror system according to claim 16 or claim 17 or claim 18 wherein the reflective condition of said reflective element is variable to a multiplicity of reflective states and wherein said indication is essentially continuously variable and further wherein said input signal is temporarily offset by said drive means in the direction of change in said indication.

22. An automatic rearview mirror system according to claim 21 wherein said reflective element is capable of withstanding a constant predetermined level of said input signal and wherein said input signal is temporarily offset beyond said predetermined level by said input means.

23. An automatic rearview mirror system for a vehicle comprising: a reflective element having a reflectance condition that varies as a function of an input signal applied to said reflective element; ambient signal generating means for producing an ambient signal indicative of the ambient light; rearward light signal generating means for producing a rear light signal indicative of light rear of the vehicle; circuit means responsive to said ambient and rearward light signals for producing a desired reflectance signal indicative of the desired reflectance condition of said reflective element; and drive means responsive to said desired reflectance signal for producing an input signal applied to said reflective element, said drive means being responsive to changes in said desired reflectance signal to modify the relationship between said desired reflectance signal and said input signal applied to said reflective element.

24. An automatic rearview mirror system according to claim 23 wherein said drive means includes amplifier means for amplifying said desired reflectance signal by a gain of said amplifying means to produce said input signal applied to said reflective element and including means for modifying said gain in response to changes in said indication.

25. An automatic rearview mirror system according to claim 24 wherein said modifying means temporarily increases said gain in response to changes in said desired reflectance signal.

26. An automatic rearview mirror system according to any of claims 23 to 25 wherein said circuit means produces said desired reflectance signal as a function of the difference between said ambient light signal and said rearward light signal and wherein said desired reflectance signal is substantially independent of the reflectance condition of said reflective element.

27. An automatic rearview mirror system according to claim 26 wherein said circuit means includes time-filtering means for time-filtering said ambient light signal, said time-filter means providing faster time-filtering of the ambient signal during periods of increasing ambient light, than during periods of decreasing ambient light.

28. An automatic rearview mirror system according to any of claims 23 to 27 wherein said reflective condition of said reflective element is variable to a multiplicity of reflective states and wherein said desired reflectance signal is essentially continuously variable and further wherein said input signal is temporarily offset by said drive means in the direction of change in said indication.

GLARE

CONTROL CIRCUIT

SENSITIVITY ADJUSTMENT

REAR LIGHT

FORWARD LIGHT

FIG. 1

FIG. 4

FIG. 3

FIG. 2

FIG. 5

FIG. 6

FIG. 7

FIG. 8

FIG. 9

22

162

12

14

DESIRED REFLECTIVITY
DETERMINING
CIRCUIT

164    167         168         160

DRIVE
CIRCUIT

166

V₃

170         169

FIG. 10

162

12

14

DESIRED REFLECTIVITY
DETERMINING
CIRCUIT

164    172         168         160

174

VARIABLE
FEEDBACK

170

V₃    178

180

VARIABLE
FEEDBACK

166

169

182

184

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 722 348 (SCHOTT GLASWERKE) <br> * column 3, line 20 - column 4, line 43; figures * <br> – – – | 1,9,15 | B 60 <br> R 1/08 |
| D,X,Y | US-A-4 793 690 (GAHAN ET AL.) <br> * column 4, line 10 - column 6, line 9; figure 1 * * column 10, line 22 - column 11, line 56 @ column 13, lines 5 -18; figure 4 * <br> – – – | 1,7-9,15, 27 | |
| X,Y,A | EP-A-0 201 938 (C-D MARKETING) <br> * page 24, line 31 - page 27, line 32; figure 9 * * page 31, lines 1 - 15 * <br> – – – | 1,9,10,15, 23,26,16, 17,27,28, 11 | |
| Y | EP-A-0 280 278 (ICHIKOH INDUSTRIES LTD) <br> * column 15, line 54 - column 16, line 39; claims 1-4 * <br> – – – – – | 16,17,28 | |

| | TECHNICAL FIELDS SEARCHED (Int. Cl.5) |
|---|---|
| | B 60 R |

The present search report has been drawn up for all claims

| Place of search | Date of completion of search | Examiner |
|---|---|---|
| The Hague | 31 January 91 | DUBOIS B.F.J. |